# EUROPÄISCHE PATENTANMELDUNG

(11) **EP 2 819 217 A1**
(43) Veröffentlichungstag der Anmeldung: **31.12.2014**
(21) Anmeldenummer: 13174210.8
(22) Anmeldetag: 28.06.2013
(51) Int. Cl.: H01M 2/20

(54) **Batteriesystem mit einem Zellverbinder und Verfahren zur Herstellung**

(71) Anmelder: MAGNA STEYR Battery Systems GmbH & Co OG, 8141 Zettling (AT)
(72) Erfinder: FAULAND, David, 8522 Groß St. Florian (AT)
(74) Vertreter: Rausch, Gabriele

(57) **Zusammenfassung**

Eine Batteriesystem umfassend eine Vielzahl von Zellen (1), wobei jede Zelle (1) einen ersten Polanschluss (2) aus Aluminium und einen zweiten Polanschluss (3) aus Kupfer aufweist, und zumindest einen Zellverbinder, wobei der Zellverbinder aus einem ersten Abschnitt (4) und einem zweiten Abschnitt (5) gebildet ist, wobei der erste Abschnitt (4) mit dem ersten Polanschluss (2) verbunden ist und der zweite Abschnitt (5) mit dem zweiten Polanschluss (3) verbunden ist, wobei der erste und der zweite Abschnitt (4, 5) durch ein elektromagnetisches Pulsschweißverfahren in einer Zellverbinder-Fügefläche (6) miteinander gefügt sind, die in einer ersten Ebene (7) liegt, wobei ein erster Fügebereich (8) zwischen erstem Abschnitt (4) und erstem Polanschluss (2) und ein zweiter Fügebereich (9) zwischen zweitem Abschnitt (5) und zweitem Polanschluss (3) in einer zweiten Ebene (10) liegen und wobei die erste Ebene (7) und die zweite Ebene (10) zueinander abgewinkelt sind und ein Verfahren zur Herstellung des Batteriesystems.

## Beschreibung

### Gebiet der Erfindung

Die vorliegende Erfindung betrifft ein Batteriesystem umfassend eine Vielzahl von Zellen, wobei jede Zelle einen ersten Polanschluss aus Aluminium und einen zweiten Polanschluss aus Kupfer aufweist. Das Batteriesystem umfasst weiters zumindest einen Zellverbinder zum Herstellen einer elektrisch leitenden Verbindung zwischen einem ersten und einem zweiten Polanschluss. Derartige Batteriesysteme werden insbesondere als Hochvoltbatterien zum Antrieb von Fahrzeugen eingesetzt.

Die vorliegende Erfindung betrifft auch ein Verfahren zur Herstellung des Batteriesystems.

### Stand der Technik

Wenn die Polanschlüsse der Zellen aus unterschiedlichen Materialien gefertigt sind, insbesondere ein Polanschluss aus Aluminium und der zweite Anschluss aus Kupfer, so bestehen erhebliche technische Schwierigkeiten derartige Polanschlüsse elektrisch leitend stoffschlüssig zu verbinden, insbesondere da die Materialien unterschiedliche Schmelzpunkte aufweisen.

Als Alternative zum thermischen Schweißen von Zellverbindern auf die Polanschlüsse wurden bereits Rührreibschweißverbindungen zwischen Zellverbindern und Polanschlüssen eingesetzt. Diese Fügestellen weisen jedoch nur eine geringe Stromtragfähigkeit auf.

Aus der EP 2 339 670 A1 ist ein Batteriemodul bekannt dass Zellverbinder zur Verbindung von Polanschlüssen unterschiedlichen Materials verwendet, die jeweils aus einer ersten und einer zweiten Verbindungsschiene bestehen. Die erste und zweite Verbindungsschiene sind miteinander rührreibgeschweißt.

### Zusammenfassung der Erfindung

Es ist eine Aufgabe der Erfindung, ein Batteriesystem umfassend eine Vielzahl von Zellen anzugeben, wobei jede Zelle einen ersten Polanschluss aus Aluminium und einen zweiten Polanschluss aus Kupfer aufweist, mit zumindest einem Zellverbinder zum Herstellen einer zuverlässigen elektrisch leitenden Verbindung zwischen einem ersten und einem zweiten Polanschluss. Insbesondere soll die elektrisch leitende Verbindung eine gute Stromtragfähigkeit aufweisen. Das Batteriesystem soll dennoch geringen Bauraum aufweisen. Es ist auch eine Aufgabe der Erfindung ein Verfahren zur Herstellung eines derartigen Batteriesystems anzugeben.

Die Lösung der Aufgabe erfolgt durch eine Batteriesystem umfassend eine Vielzahl von Zellen, wobei jede Zelle einen ersten Polanschluss aus Aluminium und einen zweiten Polanschluss aus Kupfer aufweist, und zumindest einen Zellverbinder zum Herstellen einer elektrisch leitenden Verbindung zwischen einem ersten und einem zweiten Polanschluss, wobei der Zellverbinder aus einem ersten Abschnitt und einem zweiten Abschnitt gebildet ist, wobei der erste Abschnitt aus Aluminium besteht und mit dem ersten Polanschluss verbunden ist und der zweite Abschnitt aus Kupfer besteht und mit dem zweiten Polanschluss verbunden ist, wobei der erste und der zweite Abschnitt durch ein elektromagnetisches Pulsschweißverfahren in einer Zellverbinder-Fügefläche miteinander gefügt sind, wobei die Zellverbinder-Fügefläche in einer ersten Ebene liegt, wobei ein erster Fügebereich zwischen erstem Abschnitt und erstem Polanschluss und ein zweiter Fügebereich zwischen zweitem Abschnitt und zweitem Polanschluss in einer zweiten Ebene liegen und wobei die erste Ebene und die zweite Ebene zueinander abgewinkelt sind.

Die erste Ebene, die entlang der Zellverbinder-Fügefläche verläuft und die zweite Ebene, die die Fügebereiche zwischen dem Zellverbinder und den Polanschlüssen beinhaltet, fallen also nicht zusammen und sind nicht parallel zueinander angeordnet, sondern schließen einen von 0 Grad und 180 Grad verschiedenen Winkel zueinander ein.

Auf diese Weise ist es möglich das elektromagnetische Pulsschweißen zur Herstellung der Verbindung zwischen dem ersten und dem zweiten Abschnitt des Zellverbinders einzusetzen, das eine relativ große Fügefläche erfordert, auch wenn der zur Verfügung stehende Raum zwischen den Polanschlüssen im Vergleich dazu klein ist.

Durch die zueinander abgewinkelte Anordnung der beiden Fügeebenen wird Bauraum in anderen Ebenen des Batteriesystems genutzt, als der Ebene der Verbindung der Polanschlüsse.

Weiterbildungen der Erfindung sind in den abhängigen Ansprüchen, der Beschreibung sowie den beigefügten Zeichnungen angegeben.

Bevorzugt umfasst ein Batteriesystem eine Vielzahl solcher erfindungsgemäßer Zellverbinder, die bevorzugt jeweils einen ersten Polanschluss und einen zweiten Polanschluss miteinander verbinden.

Besonders bevorzugt schließen die erste Ebene und die zweite Ebene einen Winkel von etwa 90 Grad zueinander ein, stehen also im rechten Winkel aufeinander.

Bevorzugt ist die Zellverbinder-Fügefläche unterhalb der zweiten Ebene des Batteriesystems angeordnet, wobei als "unterhalb" verstanden wird, dass die Zellverbinder-Fügefläche auf der den Zellen zugewandten Seite der zweiten Ebene, in welcher die Fügebereiche mit den Polanschlüssen liegen, angeordnet ist.

Besonders bevorzugt ist die Zellverbinder-Fügefläche seitlich am Batteriesystem angeordnet, insbesondere seitlich neben den Zellen. Unter seitlich wird dabei verstanden, dass die Zellverbinder-Fügefläche in einer Draufsicht auf das Batteriesystem zumindest teilweise, bevorzugt aber ganz, über die Ränder der Zellen hinausragt. Wenn der Winkel zwischen erster und zweiter Ebene 90 Grad beträgt, kann die Zellverbinder-Fügefläche insbesondere parallel zu schmalen Stirnwänden der Zellen neben diesen Zellen verlaufen. Hierdurch ist eine ausgesprochen platzsparende Anordnung der nötigen Fügefläche gegeben. In einer anderen Ausführungsart können die erste und zweite Ebene auch einen Winkel von 90 Grad einschließen, wobei die Zellverbinder-Fügefläche jedoch oberhalb der Polanschlüsse liegt, also nach oben gebogen ist.

Insbesondere kann die Länge der Zellverbinder-Fügefläche größer sein, als der minimale Abstand zwischen den Rändern des ersten Fügebereichs und des zweiten Fügebereichs.

Die Länge der Zellverbinder-Fügefläche kann insbesondere größer als 8 mm sein, und der minimale Abstand zwischen den Rändern des ersten Fügebereichs und des zweiten Fügebereichs weniger als 8 mm. Auf diese Weise sind sowohl eine gute Stromtragfähigkeit und eine sichere und mechanisch stabile Ausführung der Verbindung zwischen erstem und zweitem Abschnitt des Zellverbinders, als auch geringe Abmessungen des Batteriesystems gewährleistet.

Die Lösung der Aufgabe erfolgt auch durch ein Verfahren zur Herstellung eines Batteriesystems umfassend eine Vielzahl von Zellen, wobei jede Zelle einen ersten Polanschluss aus Aluminium und einen zweiten Polanschluss aus Kupfer aufweist, und zumindest einen Zellverbinder zum Herstellen einer elektrisch leitenden Verbindung zwischen einem ersten und einem zweiten Polanschluss, wobei der Zellverbinder aus einem ersten Abschnitt und einem zweiten Abschnitt gebildet wird, wobei der erste Abschnitt aus Aluminium besteht und der zweite Abschnitt aus Kupfer besteht, wobei der erste und der zweite Abschnitt durch ein elektromagnetisches Pulsschweißverfahren in einer Zellverbinder-Fügefläche miteinander gefügt werden, wobei anschließend der erste Abschnitt mit dem ersten Polanschluss verbunden wird und der zweite Abschnitt mit dem zweiten Polanschluss verbunden wird, so dass die Zellverbinder-Fügefläche in einer ersten Ebene angeordnet ist, und dass ein erster Fügebereich zwischen erstem Abschnitt und erstem Polanschluss und ein zweiter Fügebereich zwischen zweitem Abschnitt und zweitem Polanschluss in einer zweiten Ebene ausgebildet werden, wobei die erste Ebene und die zweite Ebene zueinander abgewinkelt sind.

Bevorzugt werden dabei die erste Ebene und die zweite Ebene in einem Winkel von etwa 90 Grad zueinander eingerichtet. Insbesondere wird die Zellverbinder-Fügefläche vorteilhaft unterhalb der Polanschlüsse des Batteriesystems angeordnet.

Bevorzugt wird die Länge der Zellverbinder-Fügefläche größer ausgebildet, als der minimale Abstand zwischen den Rändern des ersten Fügebereichs und des zweiten Fügebereichs.

Besonders bevorzugt werden in einem erfindungsgemäßen Verfahren zunächst mehrere erste Abschnitte als eine gemeinsame erste Schiene hergestellt und/oder zunächst mehrere zweite Abschnitte als eine gemeinsame zweite Schiene hergestellt. Die erste und zweite Schiene dienen dabei als Halbzeug. Aus den Schienen werden danach einzelne erste und/oder zweite Abschnitte zur Bildung von Zellverbindern getrennt. Vor oder nach dem Trennen der Abschnitte kann die jeweilige Schiene bzw. das Schienensegment, also die einzelnen Abschnitte, mit einem isolierenden Material umspritzt oder in ein isolierendes Material eingelegt werden. Wenn bereits die noch ungetrennten Schienen mit einem isolierenden Material umspritzt oder in ein isolierendes Material eingelegt werden, so geschieht das Trennen vorzugsweise so, dass dabei an der Trennstelle kein elektrischer Kontakt zwischen den benachbarten Abschnitten auftreten kann, beispielsweise indem jeweils ein ausreichend großer Spalt aus den Schienen gelöst wird.

### Kurzbeschreibung der Zeichnungen

Die Erfindung wird im Folgenden beispielhaft unter Bezugnahme auf die Zeichnungen beschrieben.
- Fig. 1: ist eine dreidimensionale schematische Darstellung eines Teiles eines erfindungsgemäßen Batteriesystems.
- Fig. 2: ist ein Ausschnitt einer Draufsicht auf ein Batteriesystem gem. Fig. 1 in Richtung C.
- Fig. 3: ist ein Ausschnitt einer stirnseitigen Ansicht auf ein Batteriesystem gem. Fig. 1 in Richtung A.
- Fig. 4: ist ein Ausschnitt einer Seitenansicht auf ein Batteriesystem gem. Fig. 1 in Richtung B.
- Fig. 5: sind schematische Darstellungen auf Schienen zur Herstellung von ersten bzw. zweiten Abschnitten von Zellverbindern.

### Detaillierte Beschreibung der Erfindung

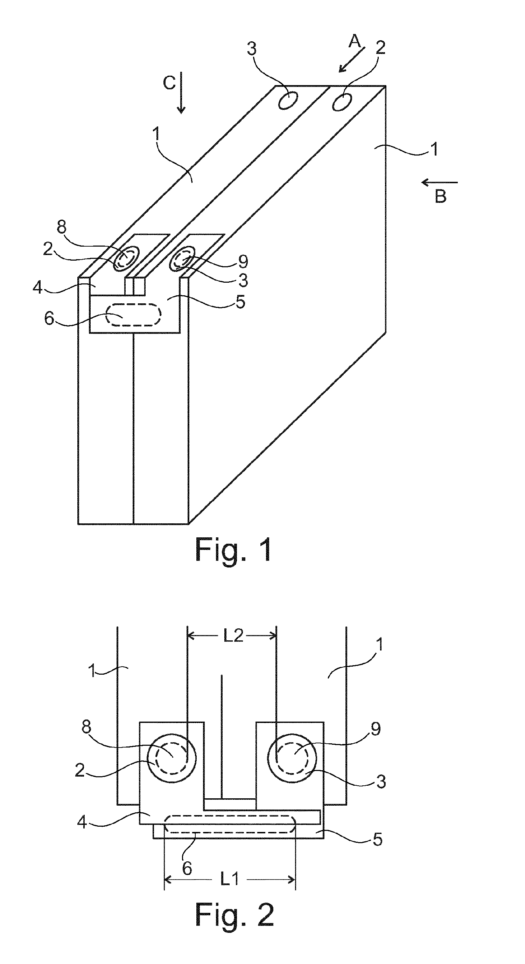

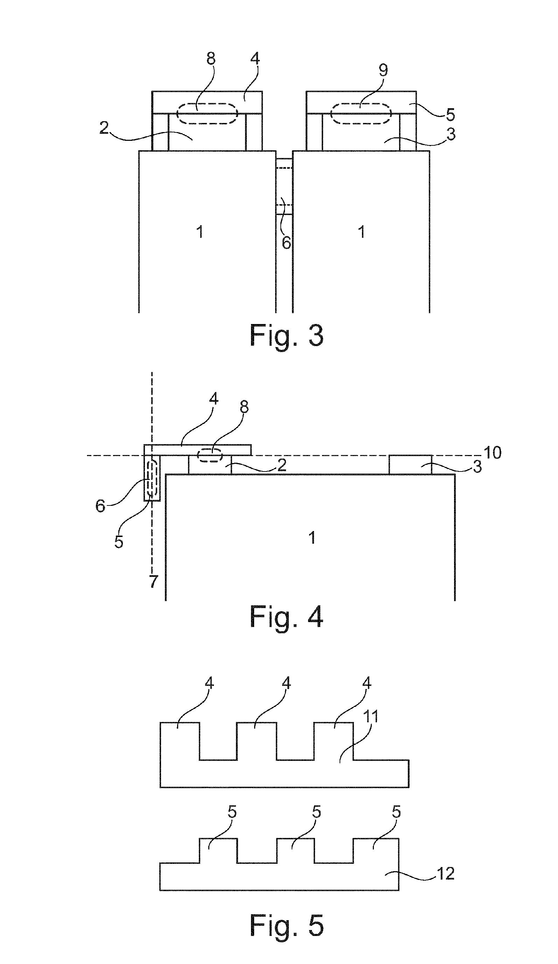

In den Fig. 1-4 ist ein erfindungsgemäßes Batteriesystems ausschnittsweise dargestellt, wobei zwei Zellen 1 aus einer Vielzahl von Zellen 1 zu sehen sind, wobei die beiden Zellen 1 jeweils einen ersten Polanschluss 2 aus Aluminium und einen zweiten Polanschluss 3 aus Kupfer aufweisen. Ein Zellverbinder zum Herstellen einer elektrisch leitenden Verbindung zwischen einem ersten und einem zweiten Polanschluss 2, 3, weist einem ersten Abschnitt 4 und einem zweiten Abschnitt 5 auf, wobei der erste Abschnitt 4 aus Aluminium besteht und mit dem ersten Polanschluss 2 verbunden ist und der zweite Abschnitt 5 aus Kupfer besteht und mit dem zweiten Polanschluss 3 verbunden ist. Der erste und der zweite Abschnitt 4, 5 sind durch ein elektromagnetisches Pulsschweißverfahren in einer Zellverbinder-Fügefläche 6 miteinander gefügt. Ein Bereich des Zellverbinders, der die Zellverbinder-Fügefläche 6 beinhaltet, ist in einer ersten Ebene 7 angeordnet - siehe Fig. 4. Ein erster Fügebereich 8 stellt eine Verbindung zwischen erstem Abschnitt 4 und erstem Polanschluss 2 her und ein zweiter Fügebereich 9 eine entsprechende Verbindung zwischen zweitem Abschnitt 5 und zweitem Polanschluss 3. Die beiden Fügebereiche liegen in einer zweiten Ebene 10, die in Bezug auf die erste Ebene 7 abgewinkelt ist, und zwar so dass die Fügefläche um etwa 90 Grad nach unten gebogen ist und somit seitlich neben den Zellen 1 liegt. Ähnlich wie in Fig. 1 für zwei Zellen 1 dargestellt, können in einem erfindungsgemäßen Batteriesystem natürlich viele weitere, jeweils benachbarte Paare von Zellen über jeweils einen gemeinsamen Zellverbinder verbunden sein.

Wie vor allem in Fig. 2 ersichtlich, ist die Länge L1 der Zellverbinder-Fügefläche 6 größer, als der minimale Abstand L2 zwischen den Rändern des ersten Fügebereichs 8 und des zweiten Fügebereichs 9, um eine mechanisch und elektrisch gute Verbindung herzustellen.

In einem erfindungsgemäßen Verfahren zur Herstellung eines Batteriesystems mit einer Vielzahl von Zellen 1, wobei jede Zelle 1 einen ersten Polanschluss 2 aus Aluminium und einen zweiten Polanschluss 3 aus Kupfer aufweist, und zumindest einen Zellverbinder zum Herstellen einer elektrisch leitenden Verbindung zwischen einem ersten und einem zweiten Polanschluss 2, 3, wird zunächst der Zellverbinder aus einem ersten Abschnitt 4 und einem zweiten Abschnitt 5 gebildet. Dazu wird ein erster Abschnitt 4, der aus Aluminium besteht und ein zweiter Abschnitt 5, der aus Kupfer besteht, durch ein elektromagnetisches Pulsschweißverfahren in einer Zellverbinder-Fügefläche 6 miteinander gefügt. Anschließend wird der erste Abschnitt 4 mit dem ersten Polanschluss 2 verbunden und der zweite Abschnitt 5 mit dem zweiten Polanschluss 3 verbunden. Dabei wird die Zellverbinder-Fügefläche 6 in einer ersten Ebene 7 angeordnet. Die Abschnitte des Zellverbinders sind gebogen ausgeführt, so dass ein erster Fügebereich 8 zwischen erstem Abschnitt 4 und erstem Polanschluss 2 und ein zweiter Fügebereich 9 zwischen zweitem Abschnitt 5 und zweitem Polanschluss 3 in einer zweiten Ebene 10 ausgebildet werden, wobei die erste Ebene 7 und die zweite Ebene 10 zueinander abgewinkelt sind.

Wie in Fig. 5 schematisch dargestellt, können als erstes mehrere erste Abschnitte 4 als eine gemeinsame erste Schiene 11 hergestellt werden und/oder mehrere zweite Abschnitte 5 als eine gemeinsame zweite Schiene 12 hergestellt werden. Danach können einzelne erste und/oder zweite Abschnitte 4, 5 aus der ersten und/oder zweiten Schiene 11, 12 getrennt werden und vor oder nach der Trennung zumindest abschnittsweise elektrisch isoliert werden.

### Bezugszeichenliste

- 1: Zelle
- 2: erster Polanschluss
- 3: zweiter Polanschluss
- 4: erster Abschnitt
- 5: zweiter Abschnitt
- 6: Zellverbinder-Fügefläche
- 7: erste Ebene
- 8: erster Fügebereich
- 9: zweiter Fügebereich
- 10: zweite Ebene
- 11: erste Schiene
- 12: zweite Schiene
- L1: Länge der Zellverbinder-Fügefläche
- L2: minimaler Abstand zwischen den Rändern des ersten Fügebereichs

## Patentansprüche

1. Batteriesystem umfassend eine Vielzahl von Zellen (1), wobei jede Zelle (1) einen ersten Polanschluss (2) aus Aluminium und einen zweiten Polanschluss (3) aus Kupfer aufweist, und zumindest einen Zellverbinder zum Herstellen einer elektrisch leitenden Verbindung zwischen einem ersten und einem zweiten Polanschluss (2, 3), **dadurch gekennzeichnet, dass** der Zellverbinder aus einem ersten Abschnitt (4) und einem zweiten Abschnitt (5) gebildet ist, wobei der erste Abschnitt (4) aus Aluminium besteht und mit dem ersten Polanschluss (2) verbunden ist und der zweite Abschnitt (5) aus Kupfer besteht und mit dem zweiten Polanschluss (3) verbunden ist, wobei der erste und der zweite Abschnitt (4, 5) durch ein elektromagnetisches Pulsschweißverfahren in einer Zellverbinder-Fügefläche (6) miteinander gefügt sind, wobei die Zellverbinder-Fügefläche (6) in einer ersten Ebene (7) liegt, wobei ein erster Fügebereich (8) zwischen erstem Abschnitt (4) und erstem Polanschluss (2) und ein zweiter Fügebereich (9) zwischen zweitem Abschnitt (5) und zweitem Polanschluss (3) in einer zweiten Ebene (10) liegen und wobei die erste Ebene (7) und die zweite Ebene (10) zueinander abgewinkelt sind.

2. Batteriesystem nach Anspruch 1,
**dadurch gekennzeichnet, dass** die erste Ebene (7) und die zweite Ebene (10) einen Winkel von etwa 90 Grad zueinander einschließen.

3. Batteriesystem nach Anspruch 1 oder 2,
**dadurch gekennzeichnet, dass** die Zellverbinder-Fügefläche (6) unterhalb der zweiten Ebene (10) des Batteriesystems angeordnet ist.

4. Batteriesystem nach zumindest einem der vorhergehenden Ansprüche,
**dadurch gekennzeichnet, dass** die Zellverbinder-Fügefläche (6) seitlich am Batteriesystem angeordnet ist, insbesondere seitlich neben den Zellen (1).

5. Batteriesystem nach zumindest einem der vorhergehenden Ansprüche,
**dadurch gekennzeichnet, dass** die Länge (L1) der Zellverbinder-Fügefläche (6) größer ist, als der minimale Abstand (L2) zwischen den Rändern des ersten Fügebereichs (8) und des zweiten Fügebereichs (9).

6. Batteriesystem nach zumindest einem der vorhergehenden Ansprüche,
**dadurch gekennzeichnet, dass** die Länge (L1) der Zellverbinder-Fügefläche größer als 8 mm ist, und insbesondere der Abstand (L2) zwischen den Rändern des ersten Fügebereichs (8) und des zweiten Fügebereichs (9) weniger als 8 mm beträgt.

7. Verfahren zur Herstellung eines Batteriesystems umfassend eine Vielzahl von Zellen (1), wobei jede Zelle (1) einen ersten Polanschluss (2) aus Aluminium und einen zweiten Polanschluss (3) aus Kupfer aufweist, und zumindest einen Zellverbinder zum Herstellen einer elektrisch leitenden Verbindung zwischen einem ersten und einem zweiten Polanschluss (2, 3),
**dadurch gekennzeichnet, dass** der Zellverbinder aus einem ersten Abschnitt (4) und einem zweiten Abschnitt (5) gebildet wird, wobei der erste Abschnitt (4) aus Aluminium besteht und der zweite Abschnitt (5) aus Kupfer besteht, wobei der erste und der zweite Abschnitt (4, 5) durch ein elektromagnetisches Pulsschweißverfahren in einer Zellverbinder-Fügefläche (6) miteinander gefügt werden, wobei anschließend der erste Abschnitt (4) mit dem ersten Polanschluss (2) verbunden wird und der zweite Abschnitt (5) mit dem zweiten Polanschluss (3) verbunden wird, so dass die Zellverbinder-Fügefläche (6) in einer ersten Ebene (7) angeordnet ist, und dass ein erster Fügebereich (8) zwischen erstem Abschnitt (4) und erstem Polanschluss (2) und ein zweiter Fügebereich (9) zwischen zweitem Abschnitt (5) und zweitem Polanschluss (3) in einer zweiten Ebene (10) ausgebildet werden, wobei die erste Ebene (7) und die zweite Ebene (10) zueinander abgewinkelt sind.

8. Verfahren nach Anspruch 7,
**dadurch gekennzeichnet , dass** die erste Ebene (7) und die zweite Ebene (10) in einem Winkel von etwa 90 Grad zueinander eingerichtet werden und insbesondere die Zellverbinder-Fügefläche (6) unterhalb der Polanschlüsse (2, 3) des Batteriesystems angeordnet wird.

9. Verfahren nach Anspruch 7 oder 8,
**dadurch gekennzeichnet, dass** die länge (L1) der Zellverbinder-Fügefläche (6) größer ausgebildet wird, als der minimale Abstand (L2) zwischen den Rändern des ersten Fügebereichs (8) und des zweiten Fügebereichs (9).

10. Verfahren nach zumindest einem der Ansprüche 7 bis 9,
**dadurch gekennzeichnet , dass** zunächst mehrere erste Abschnitte (4) als eine gemeinsame erste Schiene (11) hergestellt werden und/oder dass zunächst mehrere zweite Abschnitte (5) als eine gemeinsame zweite Schiene (12) hergestellt werden und danach einzelne erste und/oder zweite Abschnitte (4, 5) aus der ersten und/ oder zweiten Schiene (11, 12) getrennt werden.

11. Verfahren nach Anspruch 10,
**dadurch gekennzeichnet , dass** vor oder nach dem Trennen der einzelnen Abschnitte (4, 5) aus der ersten und/ oder zweiten Schiene (11, 12) die erste und/ oder zweite Schiene (11, 12) oder die einzelnen ersten und/oder zweiten Abschnitte (4, 5) in isolierendes Material eingelegt oder mit isolierendem Material umspritzt werden.
